# EUROPÄISCHE PATENTSCHRIFT

(11) **EP 2 238 412 B1**
(45) Veröffentlichungstag und Bekanntmachung des Hinweises auf die Patenterteilung: **12.10.2011**
(21) Anmeldenummer: 09705440.7
(22) Anmeldetag: 28.01.2009
(51) Int. Cl.: G01D 5/244

(54) **VERFAHREN ZUR BESTIMMUNG EINES VERDREHWINKELS**
METHOD FOR DETERMINING A TWIST ANGLE
PROCÉDÉ DE DÉTERMINATION D'UN ANGLE DE TORSION

(30) Priorität: 01.02.2008 DE 102008007372
(43) Veröffentlichungstag der Anmeldung: 13.10.2010
(73) Patentinhaber: Siemens Aktiengesellschaft, 80333 München (DE)
(72) Erfinder: HEMPL, Martin, 90610 Winkelhaid (DE)
(86) Internationale Anmeldenummer: PCT/EP2009/050930
(87) Internationale Veröffentlichungsnummer: WO 2009/095398

(56) Entgegenhaltungen:
- WO-A-02/16881

## Beschreibung

Zur Übertragung von Drehmomenten kommen bei Maschinen mit rotierenden Wellen Kupplungen zum Einsatz. Für die Maschine kann es dabei erforderlich sein, dass die durch die Kupplung verbundenen Teilwellen nicht zueinander verdreht in ihrer Nullposition miteinander verkuppelt sind, bzw. dass der Verdrehwinkel, um den die beiden Teilwellen verdreht sind, bekannt ist.

Bei lösbaren Kupplungen muss der Verdrehwinkel nach jeder erneuten Einkupplung neu bestimmt werden. Derartige lösbare Kupplungen kommen beispielsweise bei Gas- und Dampfturbinenkraftwerken (GUD) zum Einsatz, bei denen die Gasturbine über eine Welle mit der Dampfturbine verbunden ist. Die lösbare Kupplung ist dabei zwischen Gas- und Dampfturbine angeordnet. Für den Gesamtprozess der Kraftwerksanlage ist die Bestimmung des Verdrehwinkels zwischen den Teilwellen von besonderer Bedeutung.

Bislang ist zur Messung eines Verdrehwinkels bei rotierenden Wellen folgende Vorgehensweise üblich:
Zwei Wellen sind in einen beliebigen Winkel über eine lösbare Kupplung miteinander verbunden. Die 0° Positionen der beiden Wellen werden mittels einer Nullmarke, z.B. einer Kerbe definiert. Die beiden Kerben sind zueinander verdreht und spannen den gesuchten Kuppelwinkel auf.

Rechentechnisch werden die Kerben mittels optischer oder Induktiver Sensoren gemessen, wodurch ein zeitlich aufgelöstes Signal erfasst werden kann. Man erhält einen Signalverlauf für jede der beiden Teilwellen. Der Kupplungswinkel kann nun bei bekannter Drehzahl aus der Zweitdifferenz zwischen den Signalen der beiden Wellen berechnet werden.

Die Genauigkeit des gemessenen Signals ist aufgrund der schmalen Signalbreite gängiger Kerben in der Welle und durch ggf. darüber hinaus vorhandener Störsignale ungenau. In Summe können durchaus Fehler von +/- 30° auftreten.

Zur automatisierten Berechnung des Kuppelwinkels ist aus der Differenz der Winkel der jeweils ersten Ordnungen aus einer Ordnungsanalyse zu ermitteln. In der Praxis wird dazu ein handelsüblicher 2-Kanal FFT- bzw. Ordnungsanalysator verwendet, der aus den Zeitsignalen und den jeweiligen 0° Kerben die jeweiligen 1x Phasenwerte berechnet, aus deren Differenz sich der Kuppelwinkel errechnet.

Die WO 02/16881 A1 beschreibt dazu ein Verfahren zur rechnerischen Korrektur einer Winkelmessung. Durch das Verfahren sollen Torsionsmessungen möglich sein, durch die bei Fertigung oder Montage auftretenden statischen Toleranz- und Dejustagefehler nachträglich korrigiert werden können. Dabei werden bei einer anfänglichen Kalibrierung die Fehler der Eingangsgrößen mit Hilfe eines Refernzwinkelgebers ermittelt und gespeichert. Um den Fehlerwinkel zu minimieren werden die Fehler mittels einer Fourieranalyse gefiltert und drehwinkelabhängig von den Winkelwerten abgezogen. Störsignale können jedoch dadurch nicht vermieden werden.

Nachteilig an den bekannten Verfahren zur Bestimmung eines Wickels zwischen einem ersten Wellenabschnitt und einem zweiten Wellenabschnitt ist insbesondere die große Ungenauigkeit des Berechnungsergebnisses.

Ebenso führen Signalstörungen, z.B. hervorgerufen von Netzschwankungen, zu mangelhaften Ergebnissen.

Die Aufgabe der Erfindung besteht darin ein Verfahren vorzuschlagen, wodurch sich der Winkel zwischen einem ersten Wellenabschnitt und einem zweiten Wellenabschnitt an einer rotierenden Maschine mit einer Ungenauigkeit kleiner +/- 1° berechnen lässt.

Gelöst wird die Aufgabe durch ein Verfahren, bei dem die 0° Position des ersten Wellenabschnitts, auf den sich der Verdrehwinkel bezieht, ein erstes Wellensignal liefert, und die 0° Position des zweiten Wellenabschnitts ein zweites Wellensignal liefert. Das erste Wellensignal und das zweite Wellensignal werden jeweils mittels Fourieranalyse in Frequenzkomponenten harmonischer Schwingungen zerlegt werden. Dabei werden für das erste Wellensignal Frequenzen fₙ₁, und für das zweite Wellensignal Frequenzen fₙ₂ gebildet, wobei die Frequenzen jeweils als komplexe Zeiger zₙ aus Betrag aₙ und Phase ϕₙ ihrer Ordnung n dargestellt werde, und jeder Zeiger zₙ die Winkelgeschwindigkeit ωₙ der jeweiligen Frequenz fₙ beschreibt. Zu den Frequenzen fₙ₁ und den Frequenzen dₙ₂ werden anschließend die jeweiligen Winkel ϕₙ der komplexen Zeiger zₙ jeweils durch ihre Ordnung n dividiert, wobei normierte komplexe Zeiger Nₙ gebildet werden, und die normierten komplexen Zeiger Nₙ komplex addiert, so dass aus den Frequenzen fₙ₁ ein erster addierter komplexer Zeiger z_{g1} und aus den Frequenzen fₙ₂ ein zweiter addierter komplexer Zeiger z_{g2} gebildet wird. Die Länge der addierten komplexen Zeiger z_{g} entspricht jeweils der arithmetischen Summe der Längen der einzelnen komplexen Zeigern zₙ. Der durch den ersten addierten komplexen Zeiger z_{g1} und den zweiten addierten komplexen Zeiger z_{g2} aufgespannte Winkel entspricht dabei dem Winkel α.

Die Erfindung geht dabei von der Überlegung aus, eine theoretische Methode zur Rückrechung von Frequenzen höherer Ordnung auf eine Frequenz 1. Ordnung zur Erhöhung der Genauigkeit eines impulsförmigen Messsignals heranzuziehen.

Die Wellensignale bestehen aus Frequenzkomponenten bzw. bei Betrachtung der Winkel des erfassten Wellensignals aus Ordnungskomponenten. Bei beispielsweise einer Drehzahl von 50Hz liegt die 1. Ordnung bei 50Hz, die 2. Ordnung bei 100Hz, usw. Da die Ordnungen die Drehzahl bereits enthält liegt die 1. Ordnung immer bei der Drehzahl und höhere Ordnungen n bei der n-fachen Drehzahl. Die Summe alle betrachteten Frequenzkomponenten bzw. Ordnungskomponenten ergibt das Wellensignal. Die Frequenzen verschiedener Ordnung erhält man durch Fourieranalyse des Wellensignals.

Die Erfindung macht sich nun zum Nutzen, dass je höher die herangezogene Ordnung ist, die Genauigkeit für Bestimmung des Verdrehwinkels steigt. In dem erfindungsgemäßen Verfahren werden daher Phasen höherer Komponenten herangezogen und die Frequenz 1. Ordnung für die Messung nicht berücksichtigt wenn Störfrequenzen in diesem Bereich auftreten (z.B. Netzeinstreuung). Eine Frequenz/Phase höherer Ordnung lässt sich jedoch nicht unmittelbar auf eine 0° Phaseninformation zurückrechnen, da sie wegen der Periodizität der Winkelfunktion nicht eindeutig ist. Bei einer Frequenz höherer Ordnung treten daher mehrere Winkel auf. Eine eindeutige Berechnung eines Winkes wird möglich, indem mehrere Frequenzen höherer Ordnung zusammen betrachtet werden. Dies geschieht indem die Frequenzen höherer Ordnung durch komplexe Zeiger dargestellt und komplex addiert werden. Die komplexe Addition bewirkt dabei eine Mittelung. Die Länge des addierten komplexen Zeigers entspricht der arithmetischen Summe der Längen der einzelnen komplexen Zeiger. Der Winkel λ des addierten komplexen Zeigers entspricht nun näherungsweise dem Winkel α, um den die Teilwellen zueinander verdreht sind.

Durch das erfindungsgemäße Verfahren lässt sich der Winkel zwischen einem ersten Wellenabschnitt und einem zweiten Wellenabschnitt mit einer minimierten Ungenauigkeit berechnen. Dies wird insbesondere durch die Mittelung der Frequenzen und Weglassen fehlerhafter Komponenten erreicht.

Bei einer bevorzugten Form des Verfahrens werden zur Bestimmung des ersten addierten komplexen Zeiger z_{g1} und den zweiten addierten komplexen Zeiger z_{g2} jeweils nur die Winkel ϕₙ verwendet, bei welchen die Länge ersten addierten komplexen Zeiger z_{g1} oder den zweiten addierten komplexen Zeiger zg₂ mit der arithmetischen Summe der Längen der einzelnen komplexen Zeigern zₙ eindeutig übereinstimmen. Alle anderen Varianten von Zeigerkombinationen stammen unter Rückrechnung der Periodizität aus falschen Annahmen zur Rekonstruktion der korrekten Phasenlage und führen zu einem fehlerhaften Ergebnis.

Bei einer weiteren Fortbildung des Verfahrens werden zur Berechnung des ersten addierten komplexen Zeiger z_{g1} und des zweiten addierten komplexen Zeiger z_{g2} Frequenzen fₙ mit Einfluss von Störsignalen oder Messfehlern nicht verwendet werden. Vorzugsweise wird dabei die Frequenz 1. Ordnung nicht verwendet.

Zweckmäßigerweise entsprechen das erste Wellensignal und das zweite Wellensignal jeweils einem impulsförmigen Wellensignal entsprechen. Das impulsförmige Wellensignal entspricht den theoretischen Phasen ϕₙ der Frequenzkomponenten eines impulsförmige Wellensignal.

Vorteilhaft sind der erste Wellenabschnitt und der zweite Wellenabschnitt über eine Kupplung miteinander verbunden. Jegliche andere lösbare Verbindungen sind jedoch ebenso denkbar.

Die Aufgabe wird zudem durch eine Vorrichtung gelöst, an der das erfindungsgemäße Verfahren ausführbar ist. Eine derartige Vorrichtung kann dabei eine rechnergestützte Mess- und Auswerteeinheit sein, die zyklische Zeitdifferenzen messen und nach dem erfindungsgemäßen Verfahren auswerten kann.

Nachfolgend wird ein Ausführungsbeispiel des erfindungsgemäßen Verfahrens anhand von Figuren näher erläutert. Es zeigt:
- FIG 1: Schritt a) Messung und Bestimmung von Zeitsignalen und Zeitdifferenzen
- FIG 2: Order Tracking
- FIG 3: Schritt b) Simulation der Fourieranalyse des Wel- lensignals
- FIG 4: Schritt c) Bestimmung des Winkels

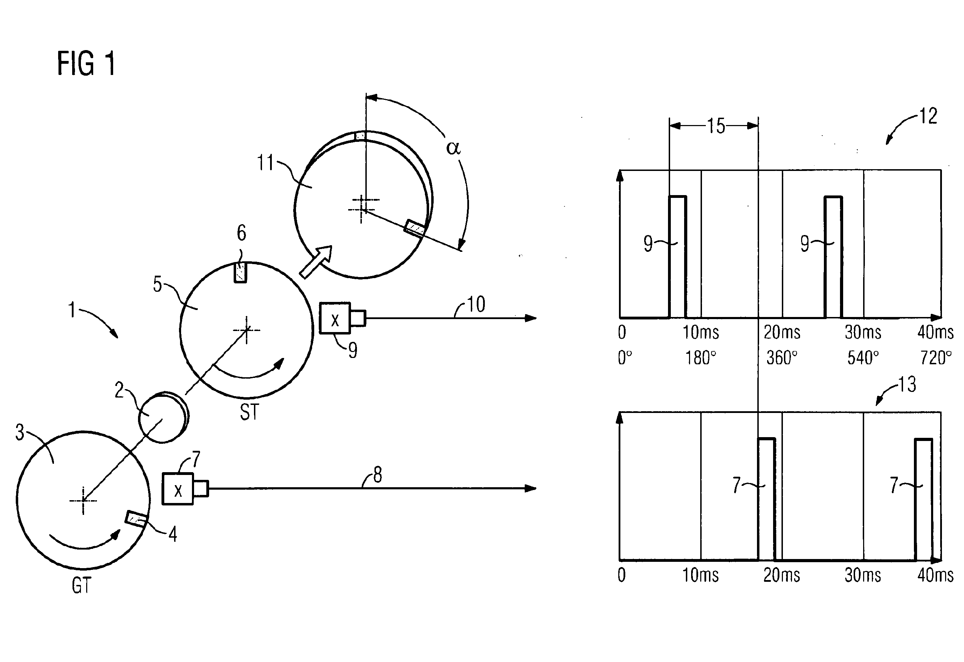

Figur 1 zeigt linksseitig eine Explosionsdarstellung einer Wellenanordnung, wie sie beispielsweise bei einer Gas- und Dampfturbinenanlage üblich ist. Die Gasturbine ist mit einer Dampfturbine dabei über eine Welle 1 verbunden. Die Welle 1 besteht aus zwei Teilwellen, die über eine lösbare Kupplung 2 miteinander verbunden sind. Die erste Teilwelle 3 ist mit der Gasturbine verbunden, und weist eine erste Kerbe 4 auf, die die 0° Position der ersten Teilwelle kennzeichnet. Die zweite Teilwelle 5 ist mit der Dampfturbine verbunden und weist eine zweite Kerbe 6 auf, die die 0° Position der zweiten Teilwelle 5 kennzeichnet. An der ersten Teilwelle 3 ist ein erster Sensor 7 angeordnet, der ein erstes Messsignal 8 erfasst. An der zweiten Teilwelle 5 ist ein zweiter Sensor 9 angeordnet, der ein zweites Messsignal 10 erfasst.

Die Projektionsansicht 11 zeigt eine leicht versetzte Draufsicht auf die beiden Teilwellen. Zu sehen ist, dass die 0° Position der beiden Teilwellen zueinander um einen Winkel α verdreht ist.

Rechtsseitig sind in Figur 1 die Messergebnisse der beiden Sensoren dargestellt. Im oberen Diagramm 12 sind die Messergebnisse des zweiten Sensors 9 dargestellt. Das untere Diagramm 13 zeigt die Messergebnisse des ersten Sensors 7. In den Diagrammen dargestellt sind periodische Rechteckantworten. Von der Laufzeitverschiebung 15 der beiden Rechteckantworten kann der Verdrehwinkel berechnet werden.

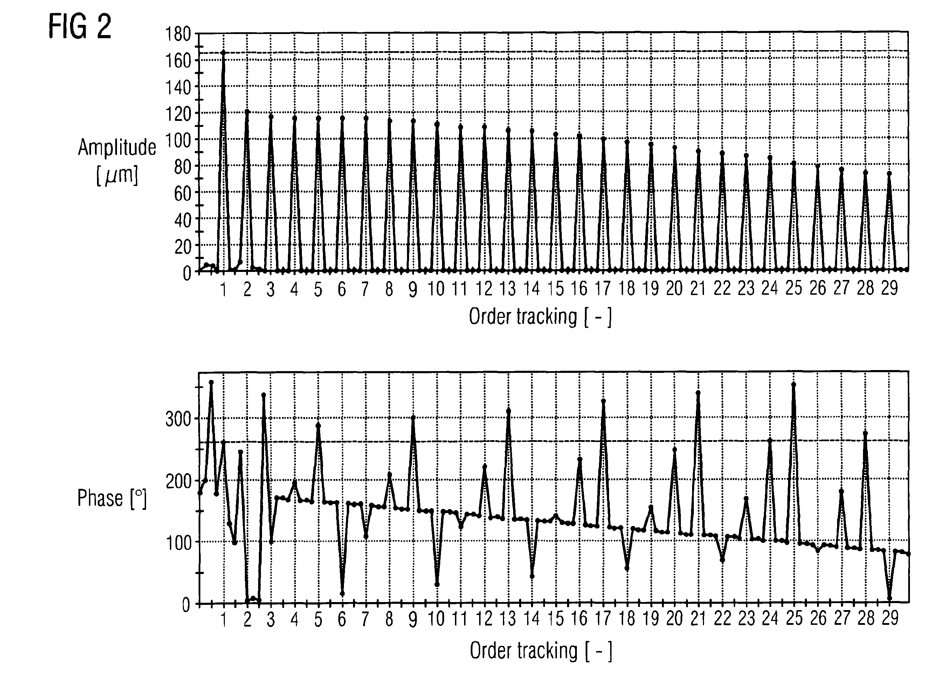

In Figur 2 zeigt das obere Diagramm die Amplitude eines Wellensignals über dem Order Tracking. Das untere Diagramm zeigt die Phase über dem Order Tracking.

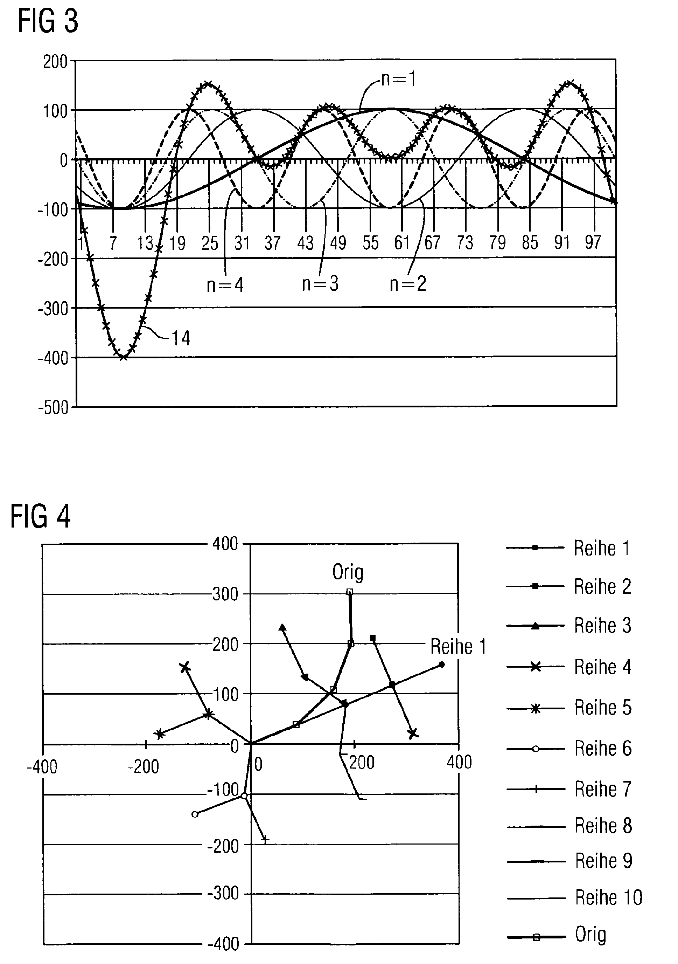

In Figur 3 ist am Beispiel einer der Beiden impulsförmigen Wellensignale eine Fourieranalyse durchgeführt. Dargestellt sind die ersten vier Harmonischen Schwingungen, also die theoretische Lage der Frequenzen der 1. bis zur 4. Ordnung n. Die Summe aller Frequenzkomponenten bildet das Wellensignal 14. Zu sehen ist, dass die Frequenzen der 2. bis zur 4. Ordnung eine höhere Periodizität als die Frequenz der 1. Ordnung hat.

In Figur 4 ist die Simulation der Rückrechnung auf die Frequenz der 1. Ordnung dargestellt. Die Reihe ORIG entspricht den komplexen Zeigern der Frequenzen der ersten vier Ordnungen ohne Normierung. Die Reihe REIHE 1 entspricht der korrekten Hypothese zur Rückrechnung. Die anderen Reihen sind mögliche Kombinationen von Rückrechnungsvarianten unter Betrachtung der Periodizität und führen zu falschen Hypothesen zur Rückrechnung.

## Patentansprüche

1. Verfahren zur Bestimmung eines Winkels α zwischen einem ersten Wellenabschnitt und einem zweiten Wellenabschnitt, wobei
- die 0° Position des ersten Wellenabschnitts ein erstes Wellensignal liefert, und die 0° Position des zweiten Wellenabschnitts ein zweites Wellensignal liefert,
- das erste Wellensignal und das zweite Wellensignal jeweils mittels Fourieranalyse in Frequenzkomponenten harmonischer Schwingungen zerlegt werden, wobei für das erste Wellensignal Frequenzen fₙ₁, und für das zweite Wellensignal Frequenzen fₙ₂ gebildet werden, wobei die Frequenzen jeweils als komplexe Zeiger zₙ aus Betrag aₙ und Phase ϕₙ ihrer Ordnung n gebildet werden, wobei jeder Zeiger zₙ die Winkelgeschwindigkeit ωₙ der jeweiligen Frequenz fₙ beschreibt, **dadurch** gekennzeichnte, dass
- zu den Frequenzen fₙ₁ und den Frequenzen fₙ₂ die jeweiligen Winkel ϕₙ der komplexen Zeiger zₙ durch ihre Ordnung n dividiert werden, wobei normierte komplexe Zeiger Nₙ gebildet werden, und die normierten komplexen Zeiger Nₙ komplex addiert werden, so dass aus den Frequenzen fₙ₁ ein erster addierter komplexer Zeiger z_{g1} und aus den Frequenzen fₙ₂ ein zweiter addierter komplexer Zeiger z_{g2} gebildet wird, wobei die Länge der addierten komplexen Zeiger z_{g} jeweils der arithmetischen Summe der Längen der einzelnen komplexen Zeigern zₙ entspricht, und
- der durch den ersten addierten komplexen Zeiger z_{g1} und den zweiten addierten komplexen Zeiger z_{g2} aufgespannte Winkel dem Winkel α entspricht.

2. Verfahren nach Anspruch 1, bei dem zur Bestimmung des ersten addierten komplexen Zeiger z_{g1} und den zweiten addierten komplexen Zeiger z_{g2} jeweils nur die Winkel ϕₙ verwendet werden, bei welchen die Länge ersten addierten komplexen Zeiger z_{g1} oder den zweiten addierten komplexen Zeiger z_{g2} mit der arithmetischen Summe der Längen der einzelnen komplexen Zeigern zₙ eindeutig übereinstimmen.

3. Verfahren nach Anspruch 1 oder 2, bei dem zur Berechnung des ersten addierten komplexen Zeiger z_{g1} und des zweiten addierten komplexen Zeiger z_{g2} Frequenzen fₙ mit Einfluss von Störsignalen oder Messfehlern nicht verwendet werden.

4. Verfahren nach Anspruch 3, bei dem die Frequenzen 1. Ordnung nicht verwendet werden.

5. Verfahren nach einem der Ansprüche 1 bis 4, bei dem das erste Wellensignal und das zweite Wellensignal jeweils einem impulsförmigen Wellensignal entsprechen.

6. Verfahren nach einem der Ansprüche 1 bis 5, bei dem der erste Wellenabschnitt und der zweite Wellenabschnitt über eine Kupplung miteinander verbunden sind.

7. Verfahren nach einem der Ansprüche 1 bis 6, bei dem die Bestimmung des ersten Wellensignals und des zweiten Wellensignals bei Rotation des ersten Wellenabschnitts und des zweiten Wellenabschnitts erfolgt.

## Claims

1. Method for determining an angle α between a first shaft section and a second shaft section, wherein
- the 0° position of the first shaft section supplies a first shaft signal and the 0° position of the second shaft section supplies a second shaft signal,
- the first shaft signal and the second shaft signal are respectively decomposed by means of Fourier analysis into frequency components of harmonic oscillations, with frequencies fₙ₁ being formed for the first shaft signal and frequencies fₙ₂ being formed for the second shaft signal, the frequencies being formed respectively as complex pointers zₙ from the absolute value aₙ and the phase ϕₙ of their order n, with each pointer zₙ describing the angular velocity ωₙ of the respective frequency fₙ,
**characterised in that**
- for the frequencies fₙ₁ and the frequencies fₙ₂ the respective angles ϕₙ of the complex pointers zₙ are divided by their order n, with standardised complex pointers Nₙ being formed, and the standardised complex pointers Nₙ are added in a complex manner, so that a first added complex pointer z_{g1} is formed from the frequencies fₙ₁ and a second added complex pointer z_{g2} is formed from the frequencies fₙ₂, the length of the added complex pointers z_{g} corresponding in each instance to the arithmetic sum of the lengths of the individual complex pointers zₙ, and
- the angle spanned by the first added complex pointer z_{g1} and the second added complex pointer z_{g2} corresponds to the angle α.

2. Method according to claim 1, wherein, to determine the first added complex pointer z_{g1} and the second added complex pointer z_{g2}, only the angles ϕₙ are used in each instance, at which the length of the first added complex pointer z_{g1} or the second added complex pointer z_{g2} corresponds uniquely to the arithmetic sum of the lengths of the individual complex pointers zₙ.

3. Method according to claim 1 or 2, wherein, to calculate the first added complex pointer z_{g1} and the second added complex pointer z_{g2}, frequencies fₙ with the influence of interference signals or measurement errors are not used.

4. Method according to claim 3, wherein the 1^{st} order frequencies are not used.

5. Method according to one of claims 1 to 4, wherein the first shaft signal and the second shaft signal correspond respectively to a pulse-type shaft signal.

6. Method according to one of claims 1 to 5, wherein the first shaft section and the second shaft section are connected to one another by way of a clutch.

7. Method according to one of claims 1 to 6, wherein the determination of the first shaft signal and of the second shaft signal takes place during rotation of the first shaft section and of the second shaft section.

## Revendications

1. Procédé de détermination d'un angle α entre un premier tronçon d'arbre et un deuxième tronçon d'arbre, dans lequel
- la position 0° du premier tronçon d'arbre fournit un premier signal d'arbre et la position 0° du deuxième tronçon d'arbre fournit un deuxième tronçon d'arbre,
- le premier signal d'arbre et le deuxième signal d'arbre sont décomposés respectivement au moyen d'une analyse de Fourier en des composantes de fréquence d'oscillations harmoniques, dans lequel on forme, pour le premier signal d'arbre, des fréquences fₙ₁ et, pour le deuxième signal d'arbre, des fréquences fₙ₂, les fréquences étant formées respectivement sous la forme d'un vecteur zₙ complexe composé d'un module aₙ et d'une phase ϕₙ de leur ordre n, chaque vecteur zₙ décrivant la vitesse ωₙ angulaire de la fréquence fₙ respective,
**caractérisé en ce que**
- pour les fréquences fₙ₁ et les fréquences fₙ₂, on divise les angles ϕₙ respectifs des vecteurs zₙ complexes par leur ordre n, des vecteurs Nₙ complexes normés étant formés et les vecteurs Nₙ complexes normés étant additionnés, de manière à former, à partir des fréquences fₙ₁, un premier vecteur z_{g1} complexe additionné et, à partir des fréquences fₙ₂, un deuxième vecteur z_{g2} complexe additionné, la longueur des vecteurs z_{g} complexes additionnés correspondant respectivement à la somme arithmétique des longueurs des divers vecteurs zₙ complexes, et
- l'angle formé par le premier vecteur z_{g1} complexe additionné et par le deuxième vecteur z_{g2} additionné correspondant à l'angle α.

2. Procédé suivant la revendication 1, dans lequel, pour la détermination du premier vecteur z_{g1} complexe additionné et du deuxième vecteur z_{g2} complexe additionné, on n'utilise respectivement que les angles ϕₙ, pour lesquels les longueurs des premiers vecteurs z_{g1} complexes additionnés ou des deuxièmes vecteurs z_{g2} complexes additionnés coïncident d'une manière nette avec la somme arithmétique des longueurs des divers vecteurs zₙ complexes individuels.

3. Procédé suivant la revendication 1 ou 2, dans lequel, pour le calcul du premier vecteur z_{g1} complexe additionné et du deuxième vecteur z_{g2} complexe additionné, on n'utilise pas des fréquences fₙ influencés par des signaux parasites ou des erreurs de mesure.

4. Procédé suivant la revendication 3, dans lequel on n'utilise pas des fréquences du premier ordre.

5. Procédé suivant l'une des revendications 1 à 4, dans lequel le premier signal d'arbre et le deuxième signal d'arbre correspondent respectivement à un signal d'arbre sous forme d'impulsions.

6. Procédé suivant l'une des revendications 1 à 5, dans lequel le premier tronçon d'arbre et le deuxième tronçon d'arbre sont reliés entre eux par un accouplement.

7. Procédé suivant l'une des revendications 1 à 6, dans lequel la détermination du premier signal d'arbre et du deuxième signal d'arbre s'effectue par rotation du premier tronçon d'arbre et du deuxième tronçon d'arbre.
